# EUROPÄISCHE PATENTSCHRIFT

(11) **EP 1 051 829 B1**
(45) Veröffentlichungstag und Bekanntmachung des Hinweises auf die Patenterteilung: **07.04.2004**
(21) Anmeldenummer: 99910098.5
(22) Anmeldetag: 29.01.1999
(51) Int. Cl.: H04M 3/20, H04Q 7/34

(54) **VERFAHREN UND SYSTEM ZUM ABHÖREN VON TELEFONGESPRÄCHEN**
METHOD AND SYSTEM FOR TAPPING TELEPHONE CONVERSATIONS
PROCEDE ET SYSTEME POUR ECOUTER DES CONVERSATIONS TELEPHONIQUES

(30) Priorität: 30.01.1998 DE 19803763
(43) Veröffentlichungstag der Anmeldung: 15.11.2000
(73) Patentinhaber: SIEMENS AKTIENGESELLSCHAFT, 80333 München (DE)
(72) Erfinder: SOMMER, Bernd, D-82166 Gräfelfing (DE); GROTE, Ulrich, D-81545 München (DE)
(86) Internationale Anmeldenummer: PCT/DE1999/000241
(87) Internationale Veröffentlichungsnummer: WO 1999/039492

(56) Entgegenhaltungen:
- WO-A-97/41678
- DE-C- 4 419 040
- US-A- 5 428 667
- US-A- 5 590 171

## Beschreibung

Die Erfindung betrifft ein Verfahren und ein System zum Abhören von Telefongesprächen.

In der Telekommunikation spielt die Mobilkommunikation unter Einsatz von Funktelefonen, im folgenden auch Mobilstationen bezeichnet, eine zunehmend wichtigere Rolle. So ist in Europa ein digitales Mobilkommunikationsnetz aufgebaut worden, das auf dem GSM-Standard basiert. Die Zahl der dieses Mobilkommunikationsnetz nutzenden Mobilteilnehmer ist in jüngerer Vergangenheit drastisch angestiegen.

Der rasante Fortschritt auf dem Gebiet der Mobilkommunikation bringt es nun mit sich, daß auch Kriminelle, z.B. Angehörige einer verbrecherischen Organisation, in zunehmendem Maße zur Planung und Abwicklung ihrer verbrecherischen Machenschaften die Vorteile dieser neuen Technologie nutzen. Deshalb sind Ermittlungsbehörden im Rahmen ihrer Ermittlungstätigkeit daran interessiert, unter Einhaltung gesetzlicher Vorschriften auch solche Telefongespräche abhören zu können, die eine unter Beobachtung stehende Zielperson über eine Mobilstation führt.

Derzeit ist das Abhören von Telefongesprächen für den Bereich der Bundesrepublik Deutschland durch die sogenannte Fernmeldeüberwachungsverordnung geregelt, nach der ein abzuhörendes Telefongespräch in einem Aufzeichnungszentrum aufgezeichnet wird, welches einer Ermittlungsbehörde untersteht. Das Nutzsignal, das im wesentlichen den Informationsgehalt des Telefongesprächs repräsentiert, d.h. die relevante Gesprächsinformation enthält, und in einem Datensatz zusammengefaßte Daten, die geeignet sind, die Zielperson zu identifizieren, also z.B. die internationale Mobilteilnehmer-Rufnummer der verwendeten Mobilstation, kurz MSISDN, werden dem Aufzeichnungszentrum zugeführt. In dem Aufzeichnungszentrum werden das Nutzsignal in Form digitaler Gesprächsdaten und der Datensatz gesichert, so daß ein autorisierter Bedarfsträger, z.B. ein mit der Überwachung der Zielperson beauftragter Kriminalbeamter das aufgezeichnete Telefongespräch abhören kann. An dieser Stelle ist darauf hinzuweisen, daß in der folgenden Beschreibung mit dem Begriff "Abhören" nicht allein das Verwerten eines akustischen Signals, sondern allgemein das Empfangen und das Auswerten der Gesprächsinformation zu verstehen ist.

Das bekannte Abhörverfahren hat den Nachteil, daß der Bedarfsträger das von der Zielperson geführte Gespräch nur am Ort des Aufzeichnungszentrums abhören kann. Ihm ist es insbesondere nicht möglich, die Zielperson, die ihrerseits durch Verwendung der Mobilstation während des Telefongesprächs nicht an einen festen Standort gebunden ist, gleichzeitig zu verfolgen und abzuhören. Dies schränkt die Effizienz des Abhörvorgangs und der damit verbundenen Verbrechensbekämpfung deutlich ein.

In der US-A-5,590,171 ist ein Verfahren zum Abhören von Telefongesprächen beschrieben. Mit diesem Verfahren können Telefongespräche innerhalb eines Intelligenten Netzes, kurz IN, abgehört werden. Dabei empfängt ein dienstspezifischer IN-Knoten Identifikationsinformationen, die dem abzuhörenden Telefongespräch zugeordnet sind. An Hand dieser Informationen stellt der IN-Knoten eine Kommunikationsverbindung zwischen den beiden miteinander kommunizierenden Teilnehmern her. Darüberhinaus sorgt er dafür, daß das Gespräch einem zum Abhören des Gesprächs befugten Teilnehmer und/oder einer Aufzeichnungseinrichtung zugeleitet wird. Eine zum Schutz der Kommunikationsteilnehmer bestimmte, dem Abhörvorgang vorangehende Gesprächsaufzeichnung sieht das in der US-A-5,590,171 erläuterte Verfahren nicht vor.

Aufgabe der Erfindung ist es, ein Verfahren und ein System anzugeben, die es ermöglichen, das Abhören von Telefongesprächen, insbesondere auch von zu überwachenden Mobilteilnehmern, effizienter zu gestalten.

Die Erfindung löst diese Aufgabe durch ein Verfahren mit den Merkmalen des Anspruchs 1.

Die an das Festnetz gekoppelte Wiedergabeeinrichtung ermöglicht es, das Telefongespräch ohne wesentliche Zeitverzögerung einem oder auch mehreren Bedarfsträgern zugänglich zu machen. Durch die Kopplung an das Festnetz kann die Wiedergabeeinrichtung unmittelbar die Kommunikationsverbindung zu der Abhöreinrichtung herstellen und die von dem Aufzeichnungszentrum angeforderten Gesprächsdaten in Form eines Wiedergabesignals an die Abhöreinrichtung senden. Abhängig davon, ob das Festnetz ein zumindest teilweise analoges oder ein digitales Fernsprechnetz ist, kann das Wiedergabesignal ein Analogoder ein Digitalsignal sein. Im letzteren Fall können die Gesprächsdaten von der Wiedergabeeinrichtung im wesentlichen unverändert an die Abhöreinrichtung weitergeleitet werden. Die Erfindung ermöglicht demnach eine sogenannte Online-Übertragung des abzuhörenden Telefongesprächs, während dieses noch andauert.

Die Wiedergabeeinrichtung bietet die Möglichkeit, die von dem Aufzeichnungszentrum empfangenen Telefongespräche an einzelne Bedarfsträger zu verteilen. Ein Bedarfsträger, beispielsweise ein mit der Überwachung der Zielperson betrauter Kriminalbeamter, ist deshalb nicht gezwungen, die Zielperson wie bisher von dem Aufzeichnungszentrum aus abzuhören. Insbesondere bei Verwendung einer Mobilstation als Abhöreinrichtung kann er die Zielperson während der Verfolgung abhören, so daß eine effizientere und flexiblere Verbrechensbekämpfung als bisher möglich ist. Die Mobilstation als Abhöreinrichtung bietet dem Bedarfsträger zudem den Vorteil der leichten Handhabung sowie der nahezu perfekten Tarnung als unverdächtiger Mobilteilnehmer.

Das erfindungsgemäße Verfahren ist nicht auf die eben erläuterte Situation beschränkt, bei der die Zielperson eine Mobilstation verwendet. Es können ebenso Telefongespräche abgehört werden, die die Zielperson über ein stationäres Telefon führt. Auch als Abhöreinrichtung kann ein stationäres Telefon verwendet werden. Durch die Erfindung ist also ein Abhörverfahren gegeben, das auf alle praktisch relevanten Gesprächsund Abhörsituationen anwendbar ist.

Das erfindungsgemäße Verfahren ermöglicht es, einen Mobilteilnehmer abzuhören, ohne in die Funkübertragung eingreifen zu müssen, die zwischen der Mobilstation des Mobilteilnehmers und einer Basis-Sende-Empfangs-Station des Mobilkommunikationsnetzes stattfindet. Dies ist von großem Vorteil, da die zwischen der Mobilstation und der Basis-Sende-Empfangs-Station ausgetauschten Signale verschlüsselt sind und ein Abhören dieser Signale mit großem Aufwand verbunden ist. Berücksichtigt man ferner, daß die Ankopplung der Wiedergabeeinrichtung an das Aufzeichnungszentrum einerseits und das Festnetz andererseits ohne größeren technischen Aufwand zu realisieren ist, so wird deutlich, daß das vorgestellte Verfahren zudem recht kostengünstig ist.

In einer vorteilhaften Weiterbildung der Erfindung wird zum Herstellen der Kommunikationsverbindung von der Wiedergabeeinrichtung eine in dem ausgewählten Vergleichsdatensatz enthaltene Rufnummer angewählt, die der Abhöreinrichtung zugeordnet ist. Die durch die gespeicherte Rufnummer gegebene Information ermöglicht es der Wiedergabeeinrichtung, die Verbindung zu dem mit der Überwachung der Zielperson beauftragten Bedarfsträger unmittelbar herzustellen, so daß dieser das Telefongespräch ohne wesentliche Zeitverzögerung abhören kann.

Beim Herstellen der Kommunikationsverbindung zwischen der Wiedergabeeinrichtung und der Abhöreinrichtung des Bedarfsträgers kann auf Steuerdaten zurückgegriffen werden, die in dem ausgewählten Vergleichsdatensatz enthalten sind. Die Steuerdaten können für jeden Bedarfsträger, d.h. für jeden einzelnen Vergleichsdatensatz, individuell erstellt werden, so daß ein flexibler und individuell optimierter Verbindungsaufbau gewährleistet ist. Durch weitere in dem Vergleichsdatensatz enthaltene Steuerdaten können der Abhöreinrichtung Zusatzinformationen übermittelt werden. So können dem Bedarfsträger beispielsweise nach Herstellen der Kommunikationsverbindung vorgegebene, individuell erstellte Textsequenzen zugespielt werden, die ihm Informationen über die abzuhörende Zielperson liefern.

Der Informationsgehalt des Telefongesprächs kann in dem Aufzeichnungszentrum durch eine digitale Aufzeichnungseinrichtung gesichert werden. Ist das dem Aufzeichnungszentrum zugeführte Nutzsignal ein analoges Signal, so kann dieses durch die Aufzeichnungseinrichtung in digitale Gesprächsdaten gewandelt werden.

Ist die Zielperson ein Mobilteilnehmer, so kann der Datensatz beispielsweise die Internationale Mobilteilnehmer-Rufnummer MSISDN, die Internationale Mobilfunkgeräte-Kennung IMEI und/oder die Internationale Mobilteilnehmer-Kennung IMSI enthalten. Als Teilnehmerkennung kann eine der eben genannten Kennungen verwendet werden. Ferner ist es möglich, mehrere dieser Kennungen zugleich zu verwenden.

Die Wiedergabeeinrichtung kann beispielsweise mit dem Aufzeichnungszentrum über ein lokales Datennetz, auch LAN genannt, verbunden sein. Über dieses Datennetz sendet das Aufzeichnungszentrum die Gesprächsdaten und den Datensatz an die Wiedergabeeinrichtung. Durch die Verwendung eines LAN ist eine besonders schnelle Datenübertragung möglich.

Die Schnittstelle zwischen der Wiedergabeeinrichtung und dem Festnetz kann eine nach dem bekannten ISDN-Standard spezifizierte Schnittstelle sein. Die Schnittstelle kann als S₀-Schnittstelle oder, falls eine mächtigere Kommunikation gewünscht ist, als S_{2M}-Schnittstelle ausgebildet sein.

In einer weiteren vorteilhaften Weiterbildung der Erfindung gibt die Abhöreinrichtung nach Aufbau der Kommunikationsverbindung eine Identifizierungskennung an die Wiedergabeeinrichtung aus, die mit einer entsprechenden, in dem Vergleichsdatensatz enthaltenen Vergleichskennung verglichen wird. Auf diese Weise kann verhindert werden, daß ein nicht autorisierter Teilnehmer das Telefongespräch abhören kann.

Eine solche Identifizierungskennung ist beispielsweise eine persönliche Identifikationsnummer, auch PIN-Nummer genannt, die nach dem DTMF-Verfahren übertragen wird. Vorteilhaft ist die PIN-Nummer an der Schnittstelle zwischen der Wiedergabeeinrichtung und dem Festnetz zu decodieren.

Gemäß einem weiteren Aspekt der Erfindung ist ein System zum Abhören von Telefongesprächen gegeben.

Weitere vorteilhafte Ausgestaltungen der Erfindung sind Gegenstand der Unteransprüche sowie der folgenden Beschreibung.

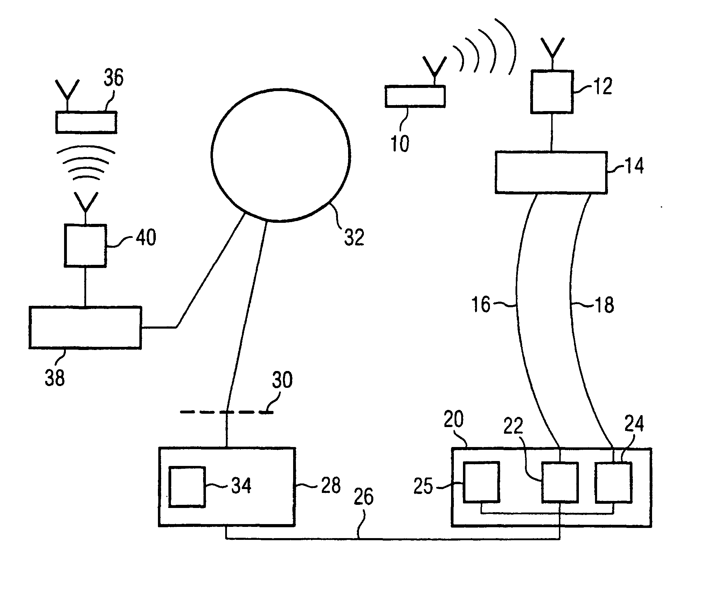

Die Erfindung wird im folgenden an einem in der einzigen Figur gezeigten Ausführungsbeispiel erläutert.

In dieser Figur ist die Erfindung für den Fall erläutert, daß das abzuhörende Zielobjekt, d.h. in der Regel die Zielperson, ein innerhalb eines nach dem bekannten GSM-Standard betriebenen öffentlichen Mobilkommunikationsnetzes agierender Mobilteilnehmer ist, der von einem autorisierten Bedarfsträger, beispielsweise einem Kriminalbeamten, unter Verwendung einer als Abhöreinrichtung fungierenden Mobilstation abgehört wird. Da der Aufbau und der Betrieb des Mobilkommunikationsnetzes an sich bekannt sind, sind in der Figur nur die Komponenten des Mobilkommunikationsnetzes dargestellt, die für das Verständnis der Erfindung erforderlich sind. Ferner wird im folgenden auf die zum Abhören von Telefongesprächen notwendigen Maßnahmen nur in dem für die Erfindung relevanten Rahmen eingegangen.

In diesem Sinne ist in der Figur eine Situation illustriert, in der die Zielperson über eine Mobilstation 10, im folgenden auch Zielstation genannt, mit einem in der Figur nicht dargestellten Gesprächspartner kommuniziert. Mit Beginn des abzuhörenden Telefongesprächs sendet die Zielstation einer Basis-Sende-Empfangs-Station 12 über Funk ein nach dem GSM-Standard verschlüsseltes Nachrichtensignal, das ein im wesentlichen den Informationsgehalt des Telefongesprächs repräsentierendes Nutzsignal enthält. Mit dem Nutzsignal werden ferner Signalisierungsdaten übertragen, die in bekannter Weise die für den Verbindungsaufbau benötigten Vermittlungsprozesse steuern. Da das nach dem GSM-Standard übertragene Nutzsignal ein digitales Signal ist, wird im folgenden für das Nutzsignal auch der Begriff "Gesprächsdaten" verwendet.

In der Basis-Sende-Empfangs-Station 12 werden die Gesprächsdaten entschlüsselt und einer Mobilvermittlungsstelle 14 zugeführt. Von dort aus werden die Gesprächsdaten, welche die Gesprächsinformation repräsentieren, und zu einem Datensatz zusammengefaßte Teilnehmerkennungen, die eine Identifizierung der Zielperson ermöglichen, auf den mit 16 und 18 bezeichneten und aus oben genannten Gründen nicht näher spezifizierten Ubertragungswegen an ein Aufzeichnungszentrum 20 übertragen.

Der Datensatz kann als Teilnehmerkennungen neben oder an Stelle der Internationalen Mobilteilnehmer-Rufnummer, z.B. die Internationale Mobilfunkgeräte-Kennung, kurz IMEI, und/oder die Internationale Mobilteilnehmer-Kennung, kurz IMSI, enthalten. Ferner können in dem Datensatz Teilnehmerkennungen enthalten sein, die beispielsweise eine Zielwahlrufnummer bei einer Anrufumlenkung oder eine Standortkennung des Teilnehmers angeben.

In dem Aufzeichnungszentrum 20 befindet sich eine digitale Aufzeichnungseinrichtung 22, welche die empfangenen Gesprächsdaten aufzeichnet, und eine Steuerung 24, welche die Gesprächsdaten und den Datensatz einander zuordnet. Sind die Gesprächsdaten und der Datensatz einander zugeordnet, so werden sie einer Speichereinrichtung 25 zugeführt und dort gemeinsam gespeichert.

Das Aufzeichnungszentrum 20 ist über eine Datenverbindung 26, z.B. ein lokales Datennetz LAN, mit einer Wiedergabeeinrichtung 28 verbunden, welche über eine Schnittstelle 30 an ein Festnetz 32 gekoppelt ist. Die Schnittstelle 30 der Wiedergabeeinrichtung 28 kann eine nach dem ISDN-Standard spezifizierte Schnittstelle oder aber auch eine analoge a/b-Schnittstelle sein. In der Wiedergabeeinrichtung 28 ist ein Speicher 34 vorgesehen, in dem Vergleichsdatensätze abgelegt sind. Jeder dieser Vergleichsdatensätze kann einem Zielobjekt, d.h. in der Regel einer abzuhörenden Zielperson, zugeordnet sein und enthält den Teilnehmerkennungen entsprechende Vergleichskennungen, z.B. die Internationale Mobilteilnehmer-Rufnummer des abzuhörenden Mobilteilnehmers. Zudem sind in einem solchen Vergleichsdatensatz Bedarfsträgerkennungen enthalten. Eine solche Bedarfsträgerkennung kann z.B. die Rufnummer eines mit der Überwachung eines bestimmten Zielobjektes betrauten Bedarfsträgers sein, in dem Beispiel nach der Figur also die Internationale Mobilteilnehmer-Rufnummer einer als Abhöreinrichtung fungierenden Mobilstation 36. Schließlich sind in einem solchen Vergleichsdatensatz Steuerdaten enthalten, die den durch die Wiedergabeeinrichtung 28 zu vollziehenden Verbindungsaufbau zu dem Bedarfsträger steuern.

Sind nach Beginn des abzuhörenden Telefongesprächs die Gesprächsdaten und der Datensatz dem Aufzeichnungszentrum 20 zugeführt und dort einander zugeordnet, so wird der Datensatz über die Datenverbindung 26 an die Wiedergabeeinrichtung 28 gesendet. Dort wird der Datensatz mit den Vergleichsdatensätzen auf Übereinstimmung der Teilnehmerkennung mit den entsprechenden Vergleichskennungen überprüft. Für diesen Vergleich können auch mehrere Teilnehmerkennungen herangezogen werden. Ist einer der Vergleichsdatensätze durch diesen Vergleich ausgewählt, so beginnt die Wiedergabeeinrichtung mit dem Aufbau einer Kommunikationsverbindung zu dem Bedarfsträger, der durch eine in dem Vergleichsdatensatz enthaltene Bedarfsträgerkennung, z.B. eine dem Bedarfsträger zugeordnete Rufnummer, anwählbar ist. Im Bedarfsfall lassen sich hier auch mehr als ein Bedarfsträger einrichten, so daß die Übertragung auch an mehrere Bedarfsträger unabhängig voneinander erfolgen kann. An der Kommunikationsverbindung können in bekannter und deshalb an dieser Stelle nicht näher erläuterter Weise eine weitere Mobilvermittlungsstelle 38 und eine weitere Basis-Sende-Empfangs-Station 40 beteiligt sein, die einer Funkzelle des Mobilkommunikationsnetzes zugeordnet sind, in der sich die Abhörstation 36 gerade befindet.

Die Wiedergabeeinrichtung 28 wählt also die in dem ausgewählten Vergleichsdatensatz angegebene Rufnummer des Bedarfsträgers. In dem Beispiel nach der Figur ist dies die der mobilen Abhörstation 36 zugeordnete Mobilteilnehmer-Rufnummer. Sind in dem ausgewählten Vergleichsdatensatz entsprechende Steuerdaten vorgesehen, so kann der Bedarfsträger nach erfolgtem Gesprächsaufbau, d.h. nach Herstellen der Kommunikationsverbindung zwischen der Wiedergabeeinrichtung 28 und der Abhörstation 36, aufgefordert werden, sich durch Eingabe seiner PIN-Nummer, d.h. seiner persönlichen Identifikationsnummer, auszuweisen. Die PIN-Nummer wird in der Regel nach dem bekannten DTMF-Verfahren übertragen. Die erforderliche Decodierung der PIN-Nummer erfolgt vorzugsweise direkt an der Schnittstelle 30. Stimmt die PIN-Nummer mit einem entsprechenden Eintrag in dem ausgewählten Vergleichsdatensatz überein, so leitet die Wiedergabeeinrichtung 28 über die aufgebaute Kommunikationsverbindung die Wiedergabe des aufgezeichneten Telefongesprächs ein. Hierzu fordert die Wiedergabeeinrichtung 28 die in der Speichereinrichtung 25 des Aufzeichnungszentrums 20 abgelegten Gesprächsdaten an und beginnt die Wiedergabe zu Beginn des aufgezeichneten Telefongesprächs.

Durch entsprechende, in dem Speicher 34 abgelegte Steuerdaten, kann der durch die Wiedergabeeinrichtung 28 vorzunehmende Aufbau der Kommunikationsverbindung weiter verfeinert werden. So kann beispielsweise die Wiedergabeeinrichtung 28 mit einer Wahlwiederholungsfunktion ausgestattet sein, so daß bei nicht zustandegekommener Kommunikationsverbindung der Bedarfsträger nochmals von der Wiedergabeeinrichtung 28 angewählt wird.

### Bezugszeichenliste

- 10: Mobilstation
- 12: Basis-Sende-Empfangs-Station
- 14: Mobilvermittlungsstelle
- 16: Übertragungsweg
- 20: Aufzeichnungszentrum
- 22: Aufzeichnungseinrichtung
- 24: Steuerung
- 25: Speichereinrichtung
- 26: Datenverbindung
- 28: Wiedergabeeinrichtung
- 30: Schnittstelle
- 32: Festnetz
- 34: Speicher
- 36: Mobilstation
- 38: Mobilvermittlungsstelle
- 40: Basis-Sende-Empfangs-Station

## Patentansprüche

1. Verfahren zum Abhören von Telefongesprächen, bei dem nacheinander
a) ein die Gesprächsinformation eines Telefongesprächs enthaltendes Nutzsignal und ein mindestens eine digitale Teilnehmerkennung enthaltender Datensatz einem Aufzeichnungszentrum (20) zugeführt werden,
b) in dem Aufzeichnungszentrum (20) die Gesprächsinformation in Form digitaler Gesprächsdaten und der diesen zugeordnete Datensatz gesichert werden,
c) der Datensatz einer an ein Festnetz gekoppelten Wiedergabeeinrichtung (28) zugeführt und dort mit Vergleichsdatensätzen verglichen wird, die jeweils mindestens eine Vergleichskennung enthalten,
d) bei Übereinstimmung der Teilnehmerkennung mit der entsprechenden Vergleichskennung eines ausgewählten Vergleichsdatensatzes über das Festnetz (32) eine Kommunikationsverbindung zwischen der Wiedergabeeinrichtung (28) und mindestens einer für das Abhören des Telefongesprächs bestimmten Abhöreinrichtung (36) hergestellt wird,
e) die in dem Aufzeichnungszentrum (20) gesicherten Gesprächsdaten der Wiedergabeeinrichtung (28) zugeführt werden und
f) der Abhöreinrichtung (36) mittels der Wiedergabeeinrichtung (28) über die Kommunikationsverbindung ein die Gesprächsinformation enthaltendes Wiedergabesignal zugeführt wird.

2. Verfahren nach Anspruch 1,
**dadurch gekennzeichnet,**
**daß** zum Herstellen der Kommunikationsverbindung von der Wiedergabeeinrichtung (28) eine in dem ausgewählten Vergleichsdatensatz enthaltene Rufnummer ausgewählt wird, die der Abhöreinrichtung (36) zugeordnet ist.

3. Verfahren nach einem der vorhergehenden Ansprüche,
**dadurch gekennzeichnet,**
**daß** die Kommunikationsverbindung unter Verwendung von Steuerdaten erstellt wird, die in dem ausgewählten Vergleichsdatensatz enthalten sind.

4. Verfahren nach einem der vorhergehenden Ansprüche,
**dadurch gekennzeichnet,**
**daß** die Gesprächsinformation des Telefongesprächs durch eine in dem Aufzeichnungszentrum (20) enthaltene digitale Aufzeichnungseinrichtung (22) aufgezeichnet wird.

5. Verfahren nach Anspruch 4,
**dadurch gekennzeichnet,**
**daß** die Gesprächsdaten und der diesen zugeordnete Datensatz in einer in dem Aufzeichnungszentrum enthaltenen Speichereinrichtung (25) gesichert werden.

6. Verfahren nach einem der vorhergehenden Ansprüche,
**dadurch gekennzeichnet,**
**daß** als Abhöreinrichtung eine Mobilstation (36) verwendet wird.

7. Verfahren nach einem der vorhergehenden Ansprüche,
**dadurch gekennzeichnet,**
**daß** der Datensatz die Internationale Mobilteilnehmer-Rufnummer, die Internationale Mobilfunkgeräte-Kennung und/oder die Internationale Mobilteilnehmer-Kennung enthält.

8. Verfahren nach einem der vorhergehenden Ansprüche,
**dadurch gekennzeichnet,**
**daß** der Wiedergabeeinrichtung (28) die Gesprächsdaten und der Datensatz über ein lokales Datennetz (26) zugeführt werden.

9. Verfahren nach einem der vorhergehenden Ansprüche,
**gekennzeichnet durch**
eine Schnittstelle (30) zwischen der Wiedergabeeinrichtung (28) und dem Festnetz (32), die nach dem ISDN-Standard spezifiziert ist.

10. Verfahren nach einem der vorhergehenden Ansprüche,
**dadurch gekennzeichnet,**
**daß** die Vergleichsdatensätze weitere Steuerdaten zur Übermittlung von Zusatzinformationen an die Abhöreinrichtung (36) enthalten.

11. Verfahren nach einem der vorhergehenden Ansprüche,
**dadurch gekennzeichnet,**
**daß** nach Aufbau der Kommunikationsverbindung die Abhöreinrichtung (36) an die Wiedergabeeinrichtung (28) mindestens eine Identifizierungskennung ausgibt, die mit einer entsprechenden, in dem Vergleichsdatensatz enthaltenen Vergleichskennung verglichen wird.

12. Verfahren nach Anspruch 11,
**dadurch gekennzeichnet,**
**daß** die Identifzierungskennung nach dem DTMF-Verfahren übertragen und an der Schnittstelle (42) decodiert wird.

13. System zum Abhören von Telefongesprächen,
mit einem Aufzeichnungszentrum (20), das ein die Gesprächsinformation eines Telefongsprächs enthaltendes Nutzsignal und
einen mindestens eine digitale Teilnehmerkennung enthaltenden Datensatz empfängt sowie die Gesprächsinformation in Form digitaler Gesprächsdaten und den diesen zugeordneten Datensatz sichert,
**gekennzeichnet durch**
eine an das Aufzeichnungszentrum (20) und an ein Festnetz (32) gekoppelte Wiedergabeeinrichtung (28), die ausgebildet ist, nacheinander
a) den ihr von dem Aufzeichnungszentrum (20) zugeführten Datensatz mit Vergleichsdaten zu vergleichen, die jeweils mindestens eine Vergleichskennung enthalten,
b) bei Übereinstimmung der Teilnehmerkennung mit der entsprechenden Vergleichskennung eines ausgewählten Vergleichsdatensatzes über das Festnetz (32) eine Kommunikationsverbindung zu mindestens einer für das Abhören des Telefongesprächs bestimmten Abhöreinrichtung (36) herzustellen,
c) die in dem Aufzeichnungszentrum (20) gesicherten Gesprächsdaten zu empfangen und
d) der Abhöreinrichtung (36) über die Kommunikationsverbindung ein die Gesprächsinformation enthaltendes Wiedergabesignal zuzuführen.

14. System nach Anspruch 13,
**dadurch gekennzeichnet,**
**daß** das Aufzeichnungszentrum (20) mindestens eine digitale Aufzeichnungseinrichtung (22) zum Aufzeichnen der Gesprächsinformation enthält.

15. System nach einem der Ansprüche 13 oder 14,
**dadurch gekennzeichnet,**
**daß** das Aufzeichnungszentrum (20) mindestens eine Speichereinrichtung (25) zum Speichern der Gesprächsdaten und des diesen zugeordneten Datensatzes enthält.

16. System nach einem der Ansprüche 13 bis 15,
**dadurch gekennzeichnet,**
**daß** die Abhöreinrichtung eine Mobilstation (36) ist.

17. System nach einem der Ansprüche 14 bis 16,
**dadurch gekennzeichnet,**
**daß** die Wiedergabeeinrichtung (28) einen Speicher (34) zum Speichern der Vergleichsdatensätze hat.

18. System nach einem der Ansprüche 13 bis 17,
**gekennzeichnet durch**
ein an eine Schnittstelle (30) zwischen der Wiedergabeeinrichtung (28) und dem Festnetz (32) angeordnetes Mittel zum Decodieren einer nach dem DTMF-Verfahren übertragenen Identifizierungskennung, die von der Abhöreinrichtung (36) an die Wiedergabeeinrichtung (28) ausgegeben wird.

## Claims

1. Method for monitoring telephone calls, in which, in succession,
a) a useful signal (which contains the call information of a telephone call) and a data set (which contains at least one digital subscriber tag) are supplied to a recording centre (20),
b) the call information is stored in the recording centre (20) in the form of digital call data and the data set associated with such call data,
c) the data set is supplied to a relaying device (28), which is coupled to a fixed network, and is compared there with comparison data sets which each contain at least one comparison tag,
d) if the subscriber tag matches the corresponding comparison tag of a selected comparison data set, a communications link is produced via a fixed network (32), between the relaying device (28) and at least one monitoring device (36) which is intended for monitoring the telephone call,
e) the call data stored in the recording centre (20) are supplied to the relaying device (28), and
f) the monitoring device (36) is supplied by means of the relaying device (28) via the communications link, with a relayed signal which contains the call information.

2. Method according to Claim 1, **characterized in that**, in order to produce the communications link from the relaying device (28), a telephone number is dialled which is contained in the selected comparison data set and is allocated to the monitoring device (36).

3. Method according to one of the preceding claims, **characterized in that** the communications link is produced using control data which are contained in the selected comparison data set.

4. Method according to one of the preceding claims, **characterized in that** the call information of the telephone call is recorded by a digital recording device (22) which is contained in the recording centre (20).

5. Method according to Claim 4, **characterized in that** the call data and the data set associated with such call data are stored in a memory device (25) which is contained in the recording centre.

6. Method according to one of the preceding claims, **characterized in that** a mobile station (36) is used as the monitoring device.

7. Method according to one of the preceding claims, **characterized in that** the data set contains the international mobile subscriber telephone number, the international mobile radio set tag and/or the international mobile subscriber tag.

8. Method according to one of the preceding claims, **characterized in that** the relaying device (28) is supplied with the call data and the data set via a local data network (26).

9. Method according to one of the preceding claims, **characterized by** an interface (30) between the relaying device (28) and the fixed network (32), which interface (30) is specified in accordance with the ISDN Standard.

10. Method according to one of the preceding claims, **characterized in that** the comparison data sets contain further control data for transmitting additional information to the monitoring device (36).

11. Method according to one of the preceding claims, **characterized in that**, once the communications link has been set up, the monitoring device (36) emits at least one identification tag to the relaying device (28), and this is compared with a corresponding comparison tag contained in the comparison data set.

12. Method according to Claim 11, **characterized in that** the identification tag is transmitted, and is decoded at the interface (42), using the DTMF method.

13. System for monitoring telephone calls, having a recording centre (20) which receives a useful signal (which contains the call information of a telephone call) and a data set (which contains at least one digital subscriber tag) and stores the call information in the form of digital call data and the data set associated with such call data, **characterized by** a relaying device which is coupled to the recording centre (20) and to a fixed network (32), which is designed in such a way that, successively
a) the data set supplied to it from the recording centre (20) can be compared with comparison data which each contain at least one comparison tag,
b) if the subscriber tag matches the corresponding comparison tag of a selected comparison data set, a communications link is produced via the fixed network (32) to at least one monitoring device (36) which is intended for monitoring the telephone call,
c) the call data stored in the recording centre (20) can be received, and
d) the monitoring device (36) can be supplied via the communications link with a relaying signal which contains the call information.

14. System according to Claim 13, **characterized in that** the recording centre (20) contains at least one digital recording device (22) for recording call information.

15. System according to one of Claims 13 or 14, **characterized in that** the recording centre (20) contains at least one memory device (25) for storing the call data and the data set associated with such call data.

16. System according to one of Claims 13 to 15, **characterized in that** the monitoring device is a mobile station (36).

17. System according to one of Claims 14 to 16, **characterized in that** the relaying device (28) has a memory (34) for storing the comparison data sets.

18. System according to one of Claims 13 to 17, **characterized by** a means, which is arranged at an interface (30) between the relaying device (28) and the fixed network (32), for decoding an identification tag which is transmitted using the DTMF method and is emitted from the monitoring device (36) to the relaying device (28).

## Revendications

1. Procédé pour écouter des conversations téléphoniques, dans lequel successivement
a) un signal utile contenant l'information d'une conversation téléphonique et un enregistrement de données contenant au moins un identificateur d'abonné numérique sont amenés à un centre d'enregistrement (20),
b) l'information de conversation est sauvegardée dans le centre d'enregistrement (20) sous la forme de données numériques de conversation et l'enregistrement de données affecté à ces données numériques de conversation est sauvegardé dans le centre d'enregistrement,
c) l'enregistrement de données est amené à un dispositif de reproduction (28) couplé à un réseau fixe et y est comparé à des enregistrements de données de comparaison, qui contiennent respectivement au moins un identificateur de comparaison,
d) en cas de concordance de l'identificateur d'abonné avec l'identificateur de comparaison correspondant d'un enregistrement de données de comparaison sélectionné, une liaison de communication entre le dispositif de reproduction (28) et au moins un dispositif d'écoute (36) destiné à l'écoute de la conversation téléphonique est établie au moyen du réseau fixe (32),
e) les données de conversation sauvegardées dans le centre d'enregistrement (20) sont amenées au dispositif de reproduction (28) et
f) un signal de reproduction contenant l'information de conversation est amené au dispositif d'écoute (36) au moyen du dispositif de reproduction (28) par l'intermédiaire de la liaison de communication.

2. Procédé selon la revendication 1,
**caractérisé en ce que**
pour établir la liaison de communication, un numéro d'appel contenu dans l'enregistrement de données de comparaison sélectionné est sélectionné par le dispositif de reproduction (28), ce numéro d'appel étant affecté au dispositif d'écoute (36).

3. Procédé selon l'une quelconque des revendications précédentes,
**caractérisé en ce que**
la liaison de communication est créée en utilisant des données de commande qui sont contenues dans l'enregistrement de données de comparaison sélectionné.

4. Procédé selon l'une quelconque des revendications précédentes,
**caractérisé en ce que**
l'information de la conversation téléphonique est enregistrée par un dispositif d'enregistrement (22) numérique compris dans le centre d'enregistrement (20).

5. Procédé selon la revendication 4,
**caractérisé en ce que**
les données de conversation et l'enregistrement de données affecté à ces données de conversation sont sauvegardés dans un dispositif de mémorisation (25) compris dans le centre d'enregistrement.

6. Procédé selon l'une quelconque des revendications précédentes,
**caractérisé en ce que**
une station mobile (36) est utilisée comme dispositif d'écoute.

7. Procédé selon l'une quelconque des revendications précédentes,
**caractérisé en ce que**
l'enregistrement de données contient le numéro d'appel international de l'abonné mobile, l'identificateur international d'appareil de radiocommunication mobile et/ou l'identificateur international d'abonné mobile.

8. Procédé selon l'une quelconque des revendications précédentes,
**caractérisé en ce que**
les données de conversation et l'enregistrement de données sont amenés au dispositif de reproduction (28) par l'intermédiaire d'un réseau de données local (26).

9. Procédé selon l'une quelconque des revendications précédentes,
**caractérisé par**
une interface (30) entre le dispositif de reproduction (28) et le réseau fixe (32), cette interface étant spécifiée selon la norme RNIS.

10. Procédé selon l'une quelconque des revendications précédentes,
**caractérisé en ce que**
les enregistrements de données de comparaison contiennent des données de commande supplémentaires pour la transmission d'informations supplémentaires au dispositif d'écoute (36).

11. Procédé selon l'une quelconque des revendications précédentes,
**caractérisé en ce que**
après l'établissement de la liaison de communication, le dispositif d'écoute (36) émet au moins un identificateur au dispositif de reproduction (28), cet identificateur étant comparé à un identificateur de comparaison correspondant contenu dans l'enregistrement de données de comparaison.

12. Procédé selon la revendication 11,
**caractérisé en ce que**
l'identificateur est transmis selon le procédé DTMF et est décodé à l'interface (42).

13. Système pour écouter des conversations téléphoniques,
comprenant un centre d'enregistrement (20), qui reçoit un signal utile contenant l'information de conversation d'une conversation téléphonique, et un enregistrement de données contenant au moins un identificateur d'abonné numérique, et qui sauvegarde l'information de conversation sous forme de données numériques de conversation ainsi que l'enregistrement de données affecté à ces données de conversation,
**caractérisé par**
un dispositif de reproduction (28) couplé au centre d'enregistrement (20) et à un réseau fixe (32) qui est formé pour successivement
a) comparer l'enregistrement de données, qui lui est amené par le centre d'enregistrement (20), à des données de comparaison qui contiennent respectivement au moins un identificateur de comparaison,
b) établir, en cas de concordance de l'identificateur d'abonné avec l'identificateur de comparaison correspondant d'un enregistrement de données de comparaison sélectionné, une liaison de communication, au moyen du réseau fixe (32), avec au moins un dispositif d'écoute (36) destiné à l'écoute de la conversation téléphonique,
c) recevoir les données de conversation sauvegardées dans le centre d'enregistrement (20) et
d) amener au dispositif d'écoute (36) un signal de reproduction contenant l'information de conversation, au moyen de la liaison de communication.

14. Système selon la revendication 13,
**caractérisé en ce que**
le centre d'enregistrement (20) comprend au moins un dispositif d'enregistrement numérique (22) pour l'enregistrement de l'information de conversation.

15. Système selon l'une des revendications 13 ou 14,
**caractérisé en ce que**
le centre d'enregistrement (20) comprend au moins un dispositif de mémorisation (25) pour mémoriser les données de conversation et l'enregistrement de données attribué à celles-ci.

16. Système selon l'une des revendications 13 à 15,
**caractérisé en ce que**
le dispositif d'écoute est une station mobile (36).

17. Système selon l'une des revendications 14 à 16,
**caractérisé en ce que**
le dispositif de reproduction (28) a une mémoire (34) pour mémoriser les enregistrements de données de comparaison.

18. Système selon l'une des revendications 13 à 17,
**caractérisé par**
un moyen, placé à une interface (30) entre le dispositif de reproduction (28) et le réseau fixe (32), pour décoder un identificateur transmis selon le procédé DTMF, cet identificateur étant émis par le dispositif d'écoute (36) au dispositif de reproduction (28).
